# EUROPEAN PATENT SPECIFICATION

(11) **EP 3 092 865 B1**
(45) Date of publication and mention of the grant of the patent: **02.09.2020**
(21) Application number: 15703650.0
(22) Date of filing: 09.01.2015
(51) Int. Cl.: H04W 76/27, H04W 72/04

(54) **HANDLING INVALID CONFIGURATIONS FOR ENHANCED UPLINK IN CELL_FACH STATE**
HANDHABUNG VON UNGÜLTIGEN KONFIGURATIONEN FÜR ERWEITERTE AUFWÄRTSÜBERTRAGUNG IM CELL-FACH-STATUS
GESTION DE CONFIGURATIONS INVALIDES PERMETTANT UNE LIAISON MONTANTE AMÉLIORÉE DANS UN ÉTAT CELL_FACH

(30) Priority: 10.01.2014 US 201461925979 P; 18.06.2014 US 201414308530
(43) Date of publication of application: 16.11.2016
(73) Proprietor: Qualcomm Incorporated, San Diego, CA 92121-1714 (US)
(72) Inventor: SHI, Yongsheng, San Diego, California 92121-1714 (US); SHEIK, Ansah Ahmed, San Diego, California 92121-1714 (US); HSU, Liangchi, San Diego, California 92121-1714 (US); JINNU, Adarsh Kumar, San Diego, California 92121-1714 (US); KRISHNAMOORTHY, Sathish, San Diego, California 92121-1714 (US); VASUDEVAN, Guruvayurappan, San Diego, California 92121-1714 (US)
(74) Representative: Dunlop, Hugh Christopher
(86) International application number: PCT/US2015/010739
(87) International publication number: WO 2015/106053

(56) References cited:
- EP-A1- 2 658 336
- WO-A2-2014/015013
- US-A1- 2012 250 644

## Description

### BACKGROUND

US 2012/0250644A1 relates to assignment of resources for use in uplink transmissions in a wireless communication system. WO 2014/015013A2 relates to configuration of a cell update message. EP 2 658 336 A1 relates to provisioning radio resources for carrying user-plane data.

Wireless communication networks are widely deployed to provide various communication services such as telephony, video, data, messaging, broadcasts, and so on. Such networks, which are usually multiple access networks, support communications for multiple users by sharing the available network resources. One example of such a network is the UMTS Terrestrial Radio Access Network (UTRAN). The UTRAN is the radio access network (RAN) defined as a part of the Universal Mobile Telecommunications System (UMTS), a third generation (3G) mobile phone technology supported by the 3rd Generation Partnership Project (3GPP). The UMTS, which is the successor to Global System for Mobile Communications (GSM) technologies, currently supports various air interface standards, such as Wideband-Code Division Multiple Access (W-CDMA), Time Division-Code Division Multiple Access (TD-CDMA), and Time Division-Synchronous Code Division Multiple Access (TD-SCDMA). The UMTS also supports enhanced 3G data communications protocols, such as High Speed Packet Access (HSPA), which provides higher data transfer speeds and capacity to associated UMTS networks.

In addition, in 3GPP Release 8, the feature of enhanced uplink in CELL_FACH state (*e.g.* High Speed Uplink Packet Access (HSUPA)) for a user equipment (UE) in the CELL_FACH state was introduced. Enhanced uplink in CELL_FACH state allows a UE to utilize a shared uplink enhanced dedicated channel (E-DCH) for high-speed uplink transmissions when in the CELL FACH state. The UE reports its support of enhanced uplink in CELL FACH state by transmitting an indication of compatibility in a message to a network entity of the network (*e.g.,* a base station or other access point).

Likewise, the network informs the UE of its support of enhanced uplink in CELL_FACH state by including a set of enhanced uplink in CELL_FACH state channel parameters in a System Information Block Type 5 (SIB5) message broadcast to the UE. The network must also provide further uplink configuration information consisting of a number of individual configuration parameters to the UE. This information may include mapping information (*e.g.,* radio bearer mapping information), which is used to map radio bearers to lower layers, logical channels, MAC-d flows, and the like.

In practice, such configuration information provided to the UE by the network may be invalid. Consider the following example scenario. In a SIB5 message to a UE, the network signals MAC-d flows 1 and 2 such that the UE understands that these two MAC-d flows would be used for future dedicated control channel (DCCH) or dedicated traffic channel (DTCH) data transmission. Thereafter, the UE initiates and transmits a Radio Resource Control (RRC) Connection Request message to the network and the network responds by a dedicated RRC Connection Setup message, which includes radio bearer mapping info for MAC-d flow 3. In this example, there is a mismatch between SIB5 and the dedicated message. According to the specification, the UE shall use MAC-d flows 1 and/or 2 for DCCH and/or DTCH transmission, but the network did not provide the required mapping information for these two flows. As a result, the UE cannot initiate uplink data transmissions in CELL FACH in this example because invalid information was received from the network.

Additionally, consider the following additional example of how a UE may receive invalid configuration information. Suppose that in an SIB5, the network signals MAC-d flows 1 and 7. Note that MAC-d flow 7 is reserved for CCCH transmission. Thereafter, the UE may generate and transmit an RRC Connection Request message and the network may respond by transmitting a RRC Connection Setup message, which provides RB mapping info for MAC-d flow 1 and 7. In this example, the network configures MAC-d flow 7 for DCCH and/or DTCH transmission, which is incorrect, as CCCH and DCCH/DTCH transmissions are treated differently in enhanced uplink in CELL FACH state, so the MAC-d flows for these channels shall be different.

When invalid configuration information is provided, such as in the examples above, the UE may not utilize the common E-DCH. However, according to 3GPP Specification 25.331 (published by 3GPP), if both the UE and the network indicate support for enhanced uplink in CELL_FACH state, the UE is prohibited from utilizing legacy (*e.g.,* Release 99) RACH. Thus, in situations where the network and UE indicate enhanced uplink in CELL_FACH state capability but the network provides invalid configuration information, the UE may be stuck in a position where it is altogether unable to transmit on the uplink.

As the demand for mobile broadband access continues to increase, research and development continue to advance the UMTS technologies not only to meet the growing demand for mobile broadband access, but to advance and enhance the user experience with mobile communications. Thus, a need exists for improved methods and apparatuses that may improve UE uplink operation where invalid configuration information is received from the network.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In accordance with one or more aspects and corresponding disclosure thereof, various aspects are described in connection with improving wireless communication functionality associated with a UE. In an aspect, an example method of wireless communications is presented that includes receiving, at the UE and from a network entity, configuration information associated with an enhanced uplink in CELL FACH state protocol, wherein the UE is configured to transmit uplink transmissions according to the enhanced uplink in CELL FACH state protocol. In addition, the example method may further include determining that the configuration information includes invalid configuration information, and performing at least one remedial action to ensure that the UE is able to transmit the uplink transmissions based on determining that the configuration information includes invalid configuration information.

In an additional aspect, the present disclosure presents an example UE, which may include means for receiving, at the UE and from a network entity, configuration information associated with enhanced uplink in CELL_FACH state protocol, wherein the UE is configured to transmit uplink transmissions according to the enhanced uplink in CELL_FACH state protocol. In addition, the example UE may also include means for determining that the configuration information includes invalid configuration information. Moreover, the user equipment may further include means for performing at least one remedial action to ensure that the UE is able to transmit the uplink transmissions based on determining that the configuration information includes invalid configuration information.

Furthermore, the present disclosure presents a non-transitory computer-readable storage medium, comprising instructions, that when executed by a processor, cause the processor to receive, at a UE and from a network entity, configuration information associated with enhanced uplink in CELL FACH state protocol, wherein the UE is configured to transmit uplink transmissions according to the enhanced uplink in CELL_FACH state protocol. In addition, the computer-readable medium may further include instructions, that when executed by the processor, cause the processor to determine that the configuration information includes invalid configuration information. In a further aspect, the computer-readable medium may further include instructions, that when executed by the processor, cause the processor to perform at least one remedial action to ensure that the UE is able to transmit the uplink transmissions based on determining that the configuration information includes invalid configuration information.

In a further aspect of the present disclosure, a UE is presented that may include a configuration information receiving component configured to receive, at the UE and from a network entity, configuration information associated with an enhanced uplink in CELL FACH state protocol, wherein the UE is configured to transmit uplink transmissions according to the enhanced uplink in CELL_FACH state protocol. In addition, the example UE may also include a configuration information validity determination component configured to determine that the configuration information includes invalid configuration information. Furthermore, the example UE may include a remedial action performing component configured to perform at least one remedial action to ensure that the UE is able to transmit the uplink transmissions based on the configuration information validity determination component determining that the configuration information includes invalid configuration information.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a block diagram illustrating an example wireless communications system according to the present disclosure;
FIG. 2 is a block diagram illustrating an example uplink configuration manager according to an example apparatus of the present disclosure;
FIG. 3A is a flow diagram comprising a plurality of functional blocks representing an example methodology of the present disclosure;
FIG. 3B is a flow diagram comprising a plurality of functional blocks representing an example methodology of the present disclosure;
FIG. 4 is a diagram illustrating an example of a hardware implementation for an apparatus employing a processing system;
FIG. 5 is a block diagram conceptually illustrating an example of a telecommunications system;
FIG. 6 is a conceptual diagram illustrating an example of an access network; and
FIG. 7 is a block diagram conceptually illustrating an example of a Node B in communication with a UE in a telecommunications system.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

The present disclosure presents methods and apparatuses for improved uplink establishment in wireless networks. For example, according to example aspects, a UE of the present disclosure may be configured to take remedial action where invalid uplink configuration information is received from the network after the UE and the network have indicated that each is capable of communicating according to enhanced uplink in CELL_FACH state protocol.

For instance, in an example aspect, a UE may be configured to reinitiate a connection request with the network after receiving invalid uplink configuration information, wherein the connection request indicates that the UE does not support enhanced uplink in CELL_FACH state and/or that the UE is only configured to use legacy RACH (e.g. Release 99 (R99)) on the uplink. This may include the UE simply not setting an enhanced uplink in CELL_FACH state compatibility indicator in the reinitiation message. Furthermore, the UE may be configured to do so based on an establishment cause associated with the connection request. For example, the UE may only reinitiate a connection request indicating legacy RACH-only functionality after receiving invalid uplink configuration information from the network where the UE is seeking to initiate a circuit switched (CS) call, emergency call, or high priority call. In some instances, where the establishment clause is not within this predefined set of establishment causes, the UE may not reinitiate the connection request indicating legacy RACH-only compatibility.

In an additional aspect, rather than attempting to reinitiate the connection request with a current cell (*e.g.,* a primary serving cell or any other cell upon which the UE is camped) the UE may instead bar the current cell and may attempt to reselect to another cell (*e.g.,* a neighbor cell) in hopes that the configuration information received from the network will be valid. Again, the UE may be configured to perform such reselection either with all establishment causes or only where the establishment cause is one in a set of predefined establishment causes (*e.g.,* CS call, emergency call, or high priority call, for instance).

In a further aspect, the UE may discern a specific reason for the invalidity of the configuration information received from a network and may take remedial action based upon this discerned reason. For example, where the UE determines that invalid mapping information is received from the network, the UE may be configured to read previously received and stored mapping information associated with previously camped cells and utilize this previous mapping information in an attempt to establish uplink communication with the network using enhanced uplink in CELL FACH state protocol. This may be useful in some situations as UEs may store mapping information from a number (*e.g.,* 10) previously camped cells and the same network vendor may use the same mapping information across all cells. Thus, the previously stored mapping can potentially be successfully applied on a current cell. In addition, the UE may be configured to utilize the stored mapping information for a current uplink connection establishment attempt either with all establishment causes or only where the establishment cause is one in a set of predefined establishment causes (*e.g.,* CS call, emergency call, or high priority call, for instance).

Moreover, in some examples, the UE may be configured to initiate a cell update procedure where invalid configuration information is received from a network in an attempt to potentially receive valid mapping information in a Cell Update Confirm message that may be received from the network in response to the UE initiating the cell update procedure. In some instances, the UE may be configured to initiate the cell update procedure only where the invalid configuration information received from the network comprises invalid mapping information or where mapping information is simply not available. In addition, the UE may be configured to initiate the cell update procedure either with all establishment causes or only where the establishment cause is one in a set of predefined establishment causes (*e.g.,* CS call, emergency call, or high priority call, for instance).

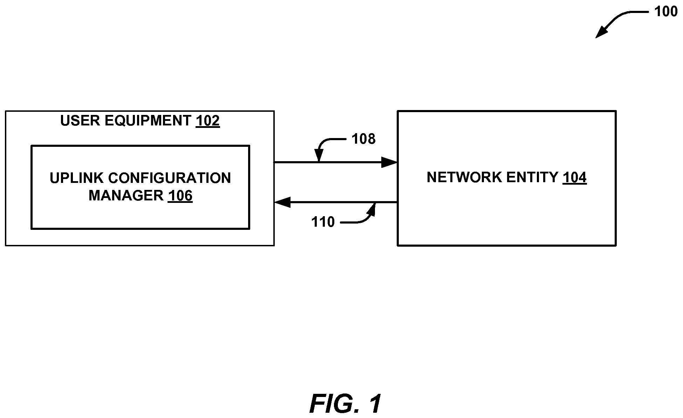

FIG. 1 is a schematic diagram illustrating a system 100 for improved UE uplink connection establishment, according to an example configuration. FIG. 1 includes an example network entity 104, which may communicate wirelessly with one or more UEs 102 over one or more wireless communication links. Furthermore, though a single network entity 104 is shown in FIG. 1, additional network entities may exist in system 100 and may communicate with UE 102 contemporaneously with network entity 104. In an aspect, such a wireless communication link may comprise any over-the-air (OTA) communication link, including, but not limited to, one or more communication links operating according to specifications promulgated by 3GPP and/or 3GPP2, which may include first generation, second generation (2G), 3G, 4G, *etc.* wireless network architectures. Furthermore, network entity 104 and UE 102 may be configured to communicate according to enhanced uplink in CELL_FACH state protocol, such as according to UMTS Release 8, and/or legacy uplink protocol (*e.g.,* R99 RACH). For example, UE 102 may be configured to communicate using enhanced uplink in CELL FACH state protocol when in a CELL FACH state.

In addition, UE 102 may be configured to transmit one or more connection request messages 108 (*e.g.,* RRC Connection Request messages) to network entity 104, which may indicate whether UE 102 is configured to communicate via enhanced uplink in CELL FACH state protocol or only via legacy RACH protocol. In addition, network entity 104 may transmit configuration information 110 to UE 102. This configuration information may include various parameters necessary for establishing uplink communication with the network and may include mapping information and information indicating whether network entity 104 supports enhanced uplink in CELL_FACH state protocol. In some examples, such configuration information 110 may be included in a SIB message (*e.g.,* SIB5 message) from the network entity 104 to the UE 102. In an additional aspect, UE 102 may include an uplink configuration manager 106, which may be configured to manage uplink configuration for uplink communication with network entity 104 based on received configuration information 110 received from network entity 104. Uplink configuration manager is described in further detail in the discussion of subsequent figures below.

In an aspect, UE 102 may be a mobile device, such as, but not limited to, a smartphone, cellular telephone, mobile phone, laptop computer, tablet computer, or other portable networked device. In addition, UE 102 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a terminal, a user agent, a mobile client, a client, or some other suitable terminology. In general, UE 102 may be small and light enough to be considered portable and may be configured to communicate wirelessly via an over-the-air communication link using one or more OTA communication protocols described herein.

Furthermore, network entity 104 of FIG. 1 may include one or more of any type of network module, such as an access point, a macro cell, including a base station (BS), node B, eNodeB (eNB), a relay, a peer-to-peer device, an authentication, authorization and accounting (AAA) server, a mobile switching center (MSC), a radio network controller (RNC), or a low-power access point, such as a picocell, femtocell, microcell, etc. Additionally, network entity 104 may communicate with one or more other network entities of wireless and/or core networks

Additionally, system 100 may include any network type, such as, but not limited to, wide-area networks (WAN), wireless networks (*e.g.* 802.11 or cellular network), the Public Switched Telephone Network (PSTN) network, *ad hoc* networks, personal area networks (*e.g.* Bluetooth®) or other combinations or permutations of network protocols and network types. Such network(s) may include a single local area network (LAN) or wide-area network (WAN), or combinations of LANs or WANs, such as the Internet.

Additionally, such network(s), which may include one or more network entities 104, may comprise a Wideband Code Division Multiple Access (W-CDMA) system, and may communicate with one or more UEs 102 according to this standard. As those skilled in the art will readily appreciate, various aspects described throughout this disclosure may be extended to other telecommunication systems, network architectures and communication standards. By way of example, various aspects may be extended to other Universal Mobile Telecommunications System (UMTS) systems such as Time Division Synchronous Code Division Multiple Access (TD-SCDMA), High Speed Downlink Packet Access (HSDPA), High Speed Uplink Packet Access (HSUPA), High Speed Packet Access Plus (HSPA+) and Time-Division CDMA (TD-CDMA). Various aspects may also be extended to systems employing Long Term Evolution (LTE) (in FDD, TDD, or both modes), LTE-Advanced (LTE-A) (in FDD, TDD, or both modes), CDMA2000, Evolution-Data Optimized (EV-DO), Ultra Mobile Broadband (UMB), Institute of Electrical and Electronics Engineers (IEEE) 802.11 (Wi-Fi), IEEE 802.16 (WiMAX®), IEEE 802.20, Ultra-Wideband (UWB), Bluetooth, and/or other suitable systems. The actual telecommunication standard, network architecture, and/or communication standard employed will depend on the specific application and the overall design constraints imposed on the system. The various devices coupled to the network(s) (*e.g.,* UEs 102, network entity 104) may be coupled to a core network via one or more wired or wireless connections.

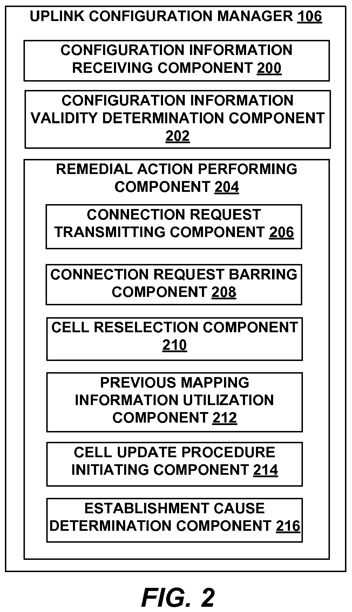

Turning to FIG. 2, an example uplink configuration manager 106 (of FIG. 1, for example) is presented as comprising a plurality of individual components for carrying out the one or more methods or processes described herein. For example, in an aspect, uplink configuration manager 106 may include a configuration information receiving component 200, which may be configured to receive configuration information from a network entity. In addition, uplink configuration manager 106 may include a configuration information validity determination component 202, which may be configured to determine the validity of the configuration information received from the network entity. In an aspect, configuration information validity determination component 202 may be configured to determine whether mapping information is missing or incorrect. This may include determining whether mapping information for MAC-d flows is missing. Furthermore, configuration information validity determination component 202 may be configured to determine whether the received configuration information invalidly configures a MAC-d flow that is reserved for a CCCH instead for DCCH and/or DTCH utilization. Additionally, configuration information validity determination component 202 may be configured to determine whether enhanced uplink in CELL_FACH state configurations in a received SIB5 message are invalid for proper enhanced uplink in CELL FACH state operation.

Furthermore, uplink configuration manager 106 may include a remedial action performing component 204, which may be configured perform at least one remedial action to ensure that the UE is able to transmit uplink transmissions, for example, after configuration information validity determination component 202 determines that the configuration information includes invalid configuration information. For example, remedial action performing component 204 may include a connection request transmitting component 206, which may be configured to transmit one or more connection requests to one or more network entities. In an aspect, the one or more connection requests may include an initial connection request indicating that the UE is configured to communicate in the uplink according to enhanced uplink in CELL_FACH state protocol. Furthermore, the one or more communication requests may include a connection request generated and transmitted subsequent to the initial communication request that indicates that the UE is not configured to communicate according to enhanced uplink in CELL_FACH state protocol and/or that the UE will transmit in the uplink according to legacy RACH protocol (*e.g.,* R99 RACH) based on receiving invalid configuration information from the network.

In an additional aspect, remedial action performing component 204 may include a connection request barring component 208, which may be configured to bar the UE from generating and/or transmitting a connection request with a current cell associated with a network entity where the network entity provided invalid configuration information to the UE (*e.g.,* in response to an initial connection request). Furthermore, remedial action performing component 204 may include a cell reselection component 210, which may be configured to reselect to a cell other than the current cell where invalid configuration information is received from the network entity.

In addition, remedial action performing component 204 may include a previous mapping information utilization component 212, which may be configured to read stored and previously obtained mapping information associated with previously camped cells and utilize the previous mapping information in a connection request transmitted to a network entity. In an aspect, the previous mapping information utilization component 212 may be configured to utilize this previous mapping information where invalid mapping information is received from a network entity. Furthermore, remedial action performing component 204 may include a cell update procedure initiating component 214, which may be configured to initiate a cell update procedure and/or transmit a cell update request to a network entity based on receiving invalid configuration information from the network entity, such as, but not limited to, invalid or missing mapping information.

In an additional aspect, remedial action performing component 204 may include an establishment cause determination component 216, which may be configured to determine an establishment cause associated with a current uplink channel establishment procedure and/or a connection request message transmission. In an aspect, the UE may initiate connection with a network entity based on one of a plurality of establishment causes. For example, the UE may seek to initiate an outgoing voice call or data transmission. Alternatively, the establishment cause may be relatively urgent, such as an establishment cause related to an emergency call, high priority call, or CS call. This may include an establishment cause of originating a conversational call, terminating a conversational call, an emergency call, originating high priority signaling, and/or terminating high priority signaling. These establishment causes may be included in a predetermined set of establishment causes that may cause the UE to generate and transmit a connection request indicating that the UE is not capable of communicating according to enhanced uplink in CELL_FACH state protocol, whether this is true or not. In an aspect, establishment causes may include, but are not limited to the additional establishment causes of Originating Conversational Call, Originating Streaming Call, Originating Interactive Call, Originating Background Call, Originating Subscribed traffic Call, Terminating Conversational Call, Terminating Streaming Call, Terminating Interactive Call, Terminating Background Call, Emergency Call, Inter-RAT cell re-selection, Inter-RAT cell change order, Registration, Detach, Originating High Priority Signalling, Originating Low Priority Signalling, Call re-establishment, Terminating High Priority Signalling, Terminating Low Priority Signalling, Terminating - cause unknown, and MBMS reception. Though the establishment causes of originating a conversational call, terminating a conversational call, an emergency call, originating high priority signaling, and/or terminating high priority signaling may be included in the predetermined set of establishment causes prompting the generation and transmission of a connection request indicating enhanced uplink in CELL FACH state incompatibility, any of the above-stated establishment causes may be included in the predetermined set of establishment causes.

Through exemplary components 200, 202, 204, 206, 208, 210, 212, 214, and 216 are presented in reference to uplink configuration manager 106, they are not exclusive. Instead, uplink configuration manager 106 may include additional or alternative components configured to perform aspects of the present disclosure and the claims recited below.

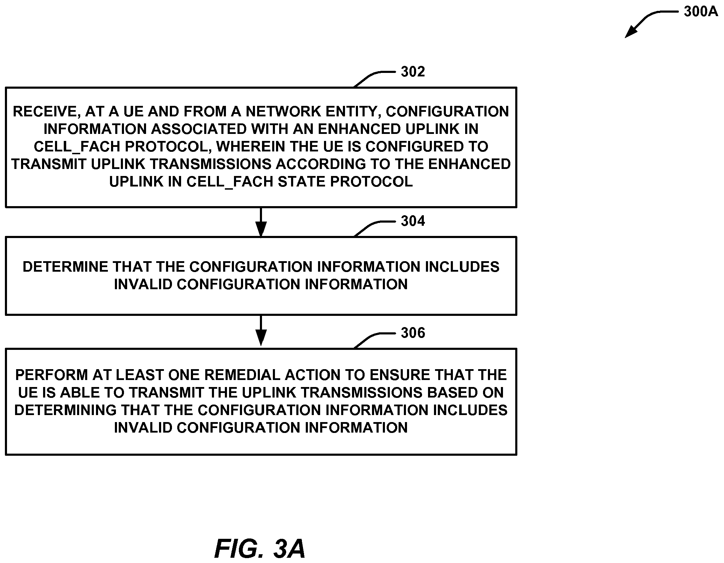

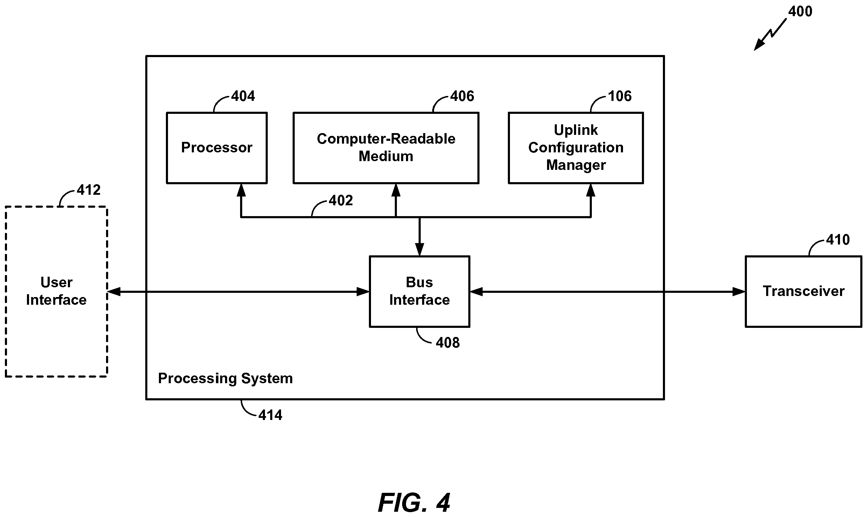

FIG. 3A presents an exemplary methodology 300A comprising a non-limiting set of steps represented as blocks that may be performed by one or more apparatuses described herein (*e.g.* a processing device (*e.g.,* processor 404 of FIG. 4), user equipment 102 of FIG. 1, and/or one or more components of UE 102, such as those presented in FIG. 2.).

In an aspect, methodology 300A may comprise a method of mobile communication at a UE, and may include, at block 302, receiving, at the UE and from a network entity, configuration information associated with an enhanced uplink in CELL_FACH state protocol, wherein the UE is configured to transmit uplink transmissions according to the enhanced uplink in CELL_FACH state protocol. In an aspect, block 302 may be performed by configuration information receiving component 200 of FIG. 2.

Additionally, methodology 300A may include, at block 304, determining that the configuration information includes invalid configuration information. In an aspect, block 304 may be performed by configuration information validity determination component 202 of FIG. 2.

Furthermore, methodology 300A may include, at block 306, performing at least one remedial action to ensure that the UE is able to transmit the uplink transmissions based on determining that the configuration information includes invalid configuration information. In an aspect, block 306 may be performed by remedial action performing component 204 of FIG. 2.

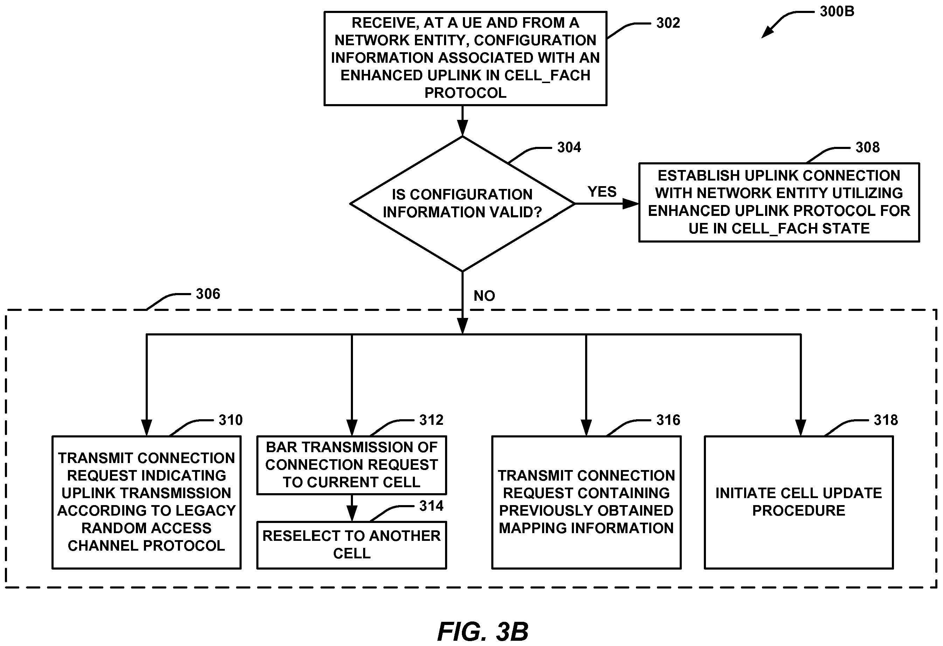

FIG. 3B presents an exemplary methodology 300B related to methodology 300A of FIG. 3A and comprising a non-limiting set of steps represented as blocks that may be performed by one or more apparatuses described herein (*e.g.* a processing device (*e.g.,* processor 404 of FIG. 4), user equipment 102 of FIG. 1, and/or one or more components of UE 102, such as those presented in FIG. 2.). FIG. 3B includes example functional blocks, which may be included in block 306 of FIG. 3A, that serve as remedial action options for purposes of the present disclosure.

In an aspect, like related methodology 300A, methodology 300B may comprise a method of mobile communication at a user equipment, and may include, at block 302, receiving, at the UE and from a network entity, configuration information associated with an enhanced uplink in CELL_FACH state protocol, wherein the UE is configured to transmit uplink transmissions according to the enhanced uplink in CELL FACH state protocol. In an aspect, the configuration information may include connection parameters such as, but not limited to, mapping information. In an aspect, receiving the configuration information from the network entity may be performed by configuration information receiving component 200 of FIG. 2.

Additionally, at block 304, methodology 300B may include determining whether the configuration information comprises valid configuration information. In an aspect, determining whether the configuration information comprises valid configuration information at block 304 may be performed by configuration information validity determination component 202 of FIG. 2. Furthermore, for purposes of the present disclosure, "valid configuration information" includes information that allows a UE to establish a connection with a network entity according to enhanced uplink in CELL_FACH state protocol as defined in UMTS and/or other 3GPP standards. For example, this may include determining whether mapping information for MAC-d flows is missing, determining whether the received configuration information configures the MAC-d flow reserved for CCCH instead for DCCH and/or DTCH utilization, and/or determining whether any other configuration information received (*e.g.,* in an SIB5 message) is invalid or would not allow uplink connection establishment according to enhanced uplink in CELL FACH state protocol.

Where it is determined that the configuration information is valid at block 304, methodology 300B may move to block 308, where a UE may (*e.g.,* via uplink configuration manager 106 of FIG. 2) initiate uplink connection establishment with the network entity utilizing enhanced uplink in CELL FACH state protocol.

However, where it is determined at block 304 that the configuration information is invalid, methodology 300B may proceed to block 306, where the UE may perform one or more remedial actions to ensure that the UE is able to transmit uplink communications in spite of the reception of invalid configuration information from the network entity. In an aspect, the remedial action performing component 204 of FIG. 2 and/or one or more components therein may perform the one or more remedial actions of block 306.

As the one or more remedial actions may include one or more of a plurality of remedial action options, block 306 includes several optional paths for taking remedial action in an attempt to establish uplink transmission functionality. For example, methodology 300B may include, at block 310, transmitting a connection request indicating uplink transmission according to legacy RACH protocol (*e.g.,* Release 99 RACH), which may include indicating in a connection request message that the UE is not configured to operate according to enhanced uplink in CELL FACH state protocol, whether true or not. In an aspect, such connection request transmission at block 310 may be performed by connection request transmitting component 206 of FIG. 2.

Alternatively, methodology 300B may move to block 312 after completion of block 304 and may include barring transmission of a connection request to a current cell at block 312. In an aspect, connection request barring component 208 of FIG. 2 may be configured to perform the barring of the transmission of the connection request to the current cell. Furthermore, upon barring transmission of the connection request to the current cell at block 312, the UE may reselect to another cell (*e.g.,* a neighbor cell) at block 314. In an aspect, cell reselection component 210 of FIG. 2 may be configured to perform this cell reselection.

In another alternative aspect, methodology 300B may proceed to block 316, which includes transmitting a connection request containing previously obtained mapping information stored at the UE. In an aspect, connection request transmitting component 206 may be configured to transmit the connection request of block 316.

Furthermore, methodology 300B may alternatively proceed to block 318 and may initiate a cell update procedure with a current cell in an effort to receive valid configuration (*e.g.,* mapping) information. In an aspect, cell update procedure initiating component 214 may be configured to perform the cell update procedure initiation of block 218.

Furthermore, though not shown, methodology 300B may include determining an establishment cause associated with a connection request, and may proceed to one of the optional paths of blocks 308 (*e.g.,* block 310, block 312 (and 314), 316, or 318 based on whether the establishment cause is one of a predetermined set of establishment causes as described above. In an aspect, such a determination may be made by establishment cause determination component 216 of FIG. 2. In addition, methodology 300B may include determining a particular reason why the configuration information is invalid. For example, where mapping information is mismatched, does not comply with a standard or protocol for enhanced uplink in CELL_FACH state functionality, methodology 300B may proceed to one of blocks 310, block 312 (and 314), 316, or 318 based on the invalid or missing mapping information.

FIG. 4 is a conceptual diagram illustrating an example of a hardware implementation for an apparatus 400 employing a processing system 414. In some examples, the processing system 414 may comprise a UE or a component of a UE. In this example, the processing system 414 may be implemented with a bus architecture, represented generally by the bus 402. The bus 402 may include any number of interconnecting buses and bridges depending on the specific application of the processing system 414 and the overall design constraints. The bus 402 links together various circuits including one or more processors, represented generally by the processor 404, computer-readable media, represented generally by the computer-readable medium 406, and an uplink configuration manager 106 (*see* FIG. 1), which may be configured to carry out one or more methods or procedures described herein. In an aspect, the uplink configuration manager 106 and the components therein may comprise hardware, software, or a combination of hardware and software that may be configured to perform the functions, methodologies (*e.g.,* methodology 300A of FIG. 3), or methods presented in the present disclosure.

The bus 402 may also link various other circuits such as timing sources, peripherals, voltage regulators, and power management circuits, which are well known in the art, and therefore, will not be described any further. A bus interface 408 provides an interface between the bus 402 and a transceiver 410. The transceiver 410 provides a means for communicating with various other apparatus over a transmission medium. Depending upon the nature of the apparatus, a user interface 412 (e.g., keypad, display, speaker, microphone, joystick) may also be provided.

The processor 404 is responsible for managing the bus 402 and general processing, including the execution of software stored on the computer-readable medium 406. The software, when executed by the processor 404, causes the processing system 414 to perform the various functions described infra for any particular apparatus. The computer-readable medium 406 may also be used for storing data that is manipulated by the processor 404 when executing software. In some aspects, at least a portion of the functions, methodologies, or methods associated with the uplink configuration manager 106 may be performed or implemented by the processor 404 and/or the computer-readable medium 406.

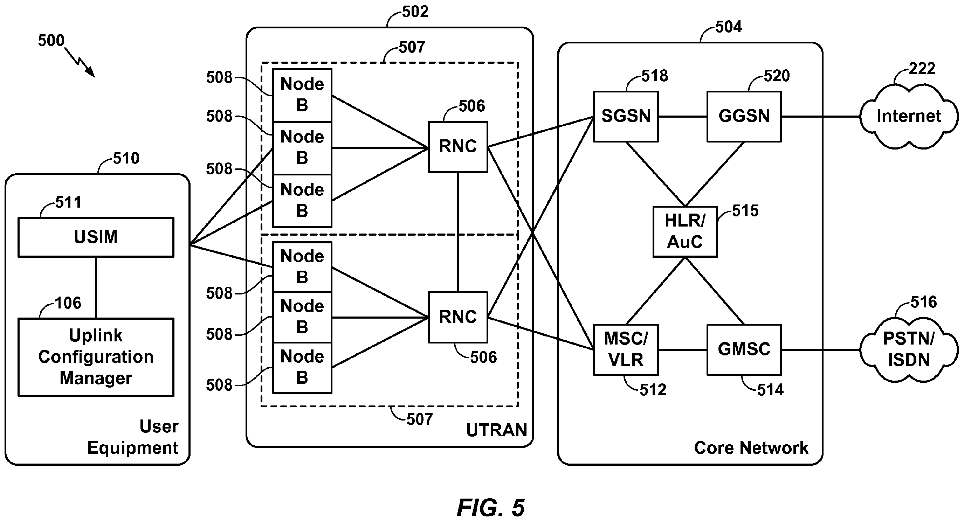

The various concepts presented throughout this disclosure may be implemented across a broad variety of telecommunication systems, network architectures, and communication standards. By way of example and without limitation, the aspects of the present disclosure illustrated in FIG. 5 are presented with reference to a UMTS system 500 employing a W-CDMA air interface. A UMTS network includes three interacting domains: a Core Network (CN) 504, a UMTS Terrestrial Radio Access Network (UTRAN) 502, and User Equipment (UE) 510. In this example, the UTRAN 502 provides various wireless services including telephony, video, data, messaging, broadcasts, and/or other services. The UTRAN 502 may include a plurality of Radio Network Subsystems (RNSs) such as an RNS 507, each controlled by a respective Radio Network Controller (RNC) such as an RNC 506. Here, the UTRAN 502 may include any number of RNCs 506 and RNSs 507 in addition to the RNCs 506 and RNSs 507 illustrated herein. The RNC 506 is an apparatus responsible for, among other things, assigning, reconfiguring and releasing radio resources within the RNS 507. The RNC 506 may be interconnected to other RNCs (not shown) in the UTRAN 502 through various types of interfaces such as a direct physical connection, a virtual network, or the like, using any suitable transport network.

Communication between a UE 510 and a Node B 508 may be considered as including a physical (PHY) layer and a medium access control (MAC) layer. Further, communication between a UE 510 and an RNC 506 by way of a respective Node B 508 may be considered as including a radio resource control (RRC) layer. In the instant specification, the PHY layer may be considered layer 1; the MAC layer may be considered layer 2; and the RRC layer may be considered layer 3. Information hereinbelow utilizes terminology introduced in Radio Resource Control (RRC) Protocol Specification, 3GPP TS 25.331 v9.1.0.

The geographic region covered by the SRNS 507 may be divided into a number of cells, with a radio transceiver apparatus serving each cell. A radio transceiver apparatus is commonly referred to as a Node B in UMTS applications, but may also be referred to by those skilled in the art as a base station (BS), a base transceiver station (BTS), a radio base station, a radio transceiver, a transceiver function, a basic service set (BSS), an extended service set (ESS), an access point (AP), or some other suitable terminology. For clarity, three Node Bs 508 are shown in each SRNS 507; however, the SRNSs 507 may include any number of wireless Node Bs. The Node Bs 508 provide wireless access points to a core network (CN) 504 for any number of mobile apparatuses. Examples of a mobile apparatus include a cellular phone, a smart phone, a session initiation protocol (SIP) phone, a laptop, a notebook, a netbook, a smartbook, a personal digital assistant (PDA), a satellite radio, a global positioning system (GPS) device, a multimedia device, a video device, a digital audio player (e.g., MP3 player), a camera, a game console, or any other similar functioning device. The mobile apparatus is commonly referred to as user equipment (UE) in UMTS applications, but may also be referred to by those skilled in the art as a mobile station (MS), a subscriber station, a mobile unit, a subscriber unit, a wireless unit, a remote unit, a mobile device, a wireless device, a wireless communications device, a remote device, a mobile subscriber station, an access terminal (AT), a mobile terminal, a wireless terminal, a remote terminal, a handset, a terminal, a user agent, a mobile client, a client, or some other suitable terminology. In a UMTS system, the UE 510 may further include a universal subscriber identity module (USIM) 511, which contains a user's subscription information to a network. In addition, UE 510 may include uplink configuration manager 106, the composition and functionality of which are described throughout the present disclosure (*see, e.g.,* FIGS. 1-3). For illustrative purposes, one UE 510 is shown in communication with a number of the Node Bs 508. The downlink (DL), also called the forward link, refers to the communication link from a Node B 508 to a UE 510, and the uplink (UL), also called the reverse link, refers to the communication link from a UE 510 to a Node B 508.

The core network 504 interfaces with one or more access networks, such as the UTRAN 502. As shown, the core network 504 is a GSM core network. However, as those skilled in the art will recognize, the various concepts presented throughout this disclosure may be implemented in a RAN, or other suitable access network, to provide UEs with access to types of core networks other than GSM networks.

The core network 504 includes a circuit-switched (CS) domain and a packet-switched (PS) domain. Some of the circuit-switched elements are a Mobile services Switching Centre (MSC), a Visitor location register (VLR) and a Gateway MSC. Packet-switched elements include a Serving GPRS Support Node (SGSN) and a Gateway GPRS Support Node (GGSN). Some network elements, like EIR, HLR, VLR and AuC may be shared by both of the circuit-switched and packet-switched domains. In the illustrated example, the core network 504 supports circuit-switched services with a MSC 512 and a GMSC 514. In some applications, the GMSC 514 may be referred to as a media gateway (MGW). One or more RNCs, such as the RNC 506, may be connected to the MSC 512. The MSC 512 is an apparatus that controls call setup, call routing, and UE mobility functions. The MSC 512 also includes a visitor location register (VLR) that contains subscriber-related information for the duration that a UE is in the coverage area of the MSC 512. The GMSC 514 provides a gateway through the MSC 512 for the UE to access a circuit-switched network 516. The core network 504 includes a home location register (HLR) 515 containing subscriber data, such as the data reflecting the details of the services to which a particular user has subscribed. The HLR is also associated with an authentication center (AuC) that contains subscriber-specific authentication data. When a call is received for a particular UE, the GMSC 514 queries the HLR 515 to determine the UE's location and forwards the call to the particular MSC serving that location.

The core network 504 also supports packet-data services with a serving GPRS support node (SGSN) 518 and a gateway GPRS support node (GGSN) 520. GPRS, which stands for General Packet Radio Service, is designed to provide packet-data services at speeds higher than those available with standard circuit-switched data services. The GGSN 520 provides a connection for the UTRAN 502 to a packet-based network 522. The packet-based network 522 may be the Internet, a private data network, or some other suitable packet-based network. The primary function of the GGSN 520 is to provide the UEs 510 with packet-based network connectivity. Data packets may be transferred between the GGSN 520 and the UEs 510 through the SGSN 518, which performs primarily the same functions in the packet-based domain as the MSC 512 performs in the circuit-switched domain.

The UMTS air interface is a spread spectrum Direct-Sequence Code Division Multiple Access (DS-CDMA) system. The spread spectrum DS-CDMA spreads user data through multiplication by a sequence of pseudorandom bits called chips. The W-CDMA air interface for UMTS is based on such direct sequence spread spectrum technology and additionally calls for a frequency division duplexing (FDD). FDD uses a different carrier frequency for the uplink (UL) and downlink (DL) between a Node B 508 and a UE 510. Another air interface for UMTS that utilizes DS-CDMA, and uses time division duplexing, is the TD-SCDMA air interface. Those skilled in the art will recognize that although various examples described herein may refer to a WCDMA air interface, the underlying principles are equally applicable to a TD-SCDMA air interface.

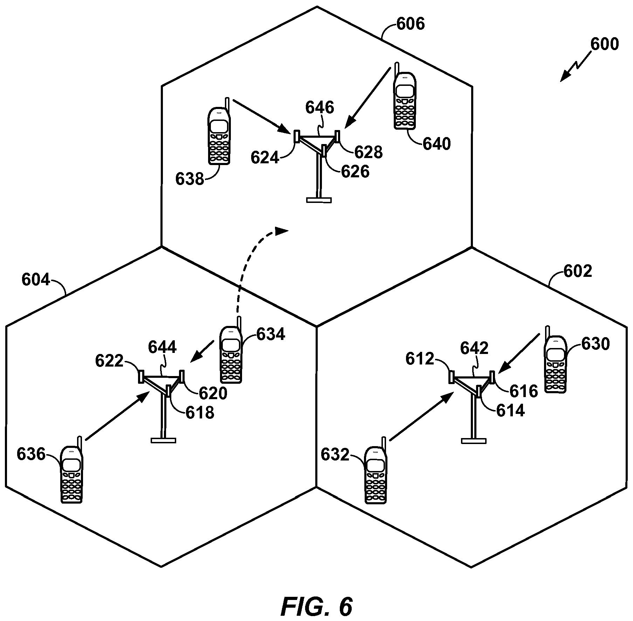

Referring to FIG. 6, an access network 600 in a UTRAN architecture is illustrated. The multiple access wireless communication system includes multiple cellular regions (cells), including cells 602, 604, and 606, each of which may include one or more sectors. The multiple sectors can be formed by groups of antennas with each antenna responsible for communication with UEs in a portion of the cell. For example, in cell 602, antenna groups 612, 614, and 616 may each correspond to a different sector. In cell 604, antenna groups 618, 620, and 622 each correspond to a different sector. In cell 606, antenna groups 624, 626, and 628 each correspond to a different sector. The cells 602, 604 and 606 may include several wireless communication devices, e.g., User Equipment or UEs, which may be in communication with one or more sectors of each cell 602, 604 or 606, and may represent UE 102 of FIG. 1 having an uplink configuration manager 106 as described herein. For example, UEs 630 and 632 may be in communication with Node B 642, UEs 634 and 636 may be in communication with Node B 644, and UEs 638 and 640 can be in communication with Node B 646. Here, each Node B 642, 644, 646 is configured to provide an access point to a core network 504 (see FIG. 5) for all the UEs 630, 632, 634, 636, 638, 640 in the respective cells 602, 604, and 606.

As the UE 634 moves from the illustrated location in cell 604 into cell 606, a serving cell change (SCC) or handover may occur in which communication with the UE 634 transitions from the cell 604, which may be referred to as the source cell, to cell 606, which may be referred to as the target cell. Management of the handover procedure may take place at the UE 634, at the Node Bs corresponding to the respective cells, at a radio network controller 506 (see FIG. 5), or at another suitable node in the wireless network. For example, during a call with the source cell 604, or at any other time, the UE 634 may monitor various parameters of the source cell 604 as well as various parameters of neighboring cells such as cells 606 and 602. Further, depending on the quality of these parameters, the UE 634 may maintain communication with one or more of the neighboring cells. During this time, the UE 634 may maintain an Active Set, that is, a list of cells that the UE 634 is simultaneously connected to (i.e., the UTRA cells that are currently assigning a downlink dedicated physical channel DPCH or fractional downlink dedicated physical channel F-DPCH to the UE 634 may constitute the Active Set).

The modulation and multiple access scheme employed by the access network 600 may vary depending on the particular telecommunications standard being deployed. By way of example, the standard may include Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. The standard may alternately be Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), Ultra Mobile Broadband (UMB), IEEE 802.11 (Wi-Fi), IEEE 802.16 (WiMAX), IEEE 802.20, and Flash-OFDM employing OFDMA. UTRA, E-UTRA, UMTS, LTE, LTE Advanced, and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

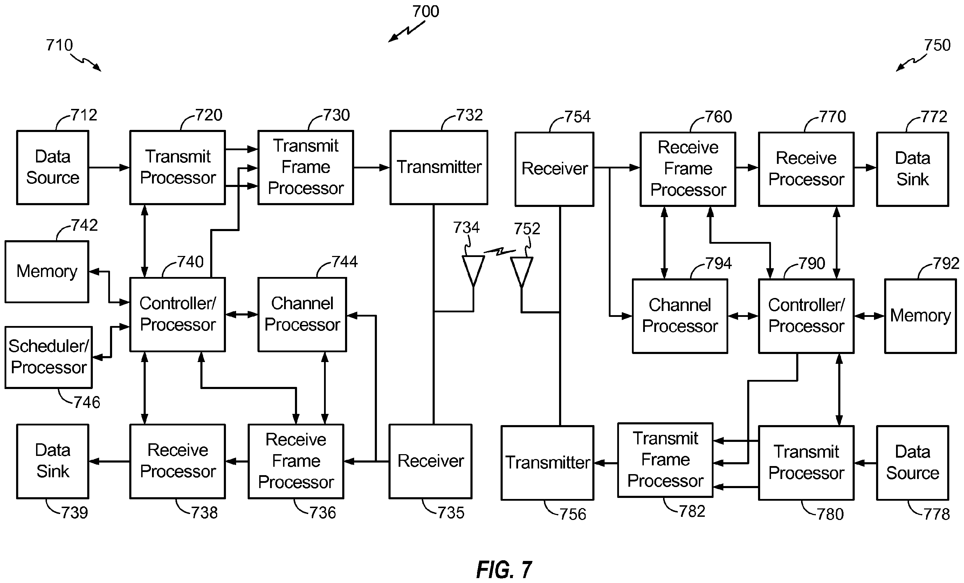

FIG. 7 is a block diagram of a Node B 710 in communication with a UE 750, where the Node B 710 may be the network entity 104 in FIG. 1, and the UE 750 may be the UE 102 in FIG. 1 having the uplink configuration manager 106. In the downlink communication, a transmit processor 720 may receive data from a data source 712 and control signals from a controller/processor 740. The transmit processor 720 provides various signal processing functions for the data and control signals, as well as reference signals (e.g., pilot signals). For example, the transmit processor 720 may provide cyclic redundancy check (CRC) codes for error detection, coding and interleaving to facilitate forward error correction (FEC), mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM), and the like), spreading with orthogonal variable spreading factors (OVSF), and multiplying with scrambling codes to produce a series of symbols. Channel estimates from a channel processor 744 may be used by a controller/processor 740 to determine the coding, modulation, spreading, and/or scrambling schemes for the transmit processor 720. These channel estimates may be derived from a reference signal transmitted by the UE 750 or from feedback from the UE 750. The symbols generated by the transmit processor 720 are provided to a transmit frame processor 730 to create a frame structure. The transmit frame processor 730 creates this frame structure by multiplexing the symbols with information from the controller/processor 740, resulting in a series of frames. The frames are then provided to a transmitter 732, which provides various signal conditioning functions including amplifying, filtering, and modulating the frames onto a carrier for downlink transmission over the wireless medium through antenna 734. The antenna 734 may include one or more antennas, for example, including beam steering bidirectional adaptive antenna arrays or other similar beam technologies.

At the UE 750, a receiver 754 receives the downlink transmission through an antenna 752 and processes the transmission to recover the information modulated onto the carrier. The information recovered by the receiver 754 is provided to a receive frame processor 760, which parses each frame, and provides information from the frames to a channel processor 794 and the data, control, and reference signals to a receive processor 770. The receive processor 770 then performs the inverse of the processing performed by the transmit processor 720 in the Node B 710. More specifically, the receive processor 770 descrambles and despreads the symbols, and then determines the most likely signal constellation points transmitted by the Node B 710 based on the modulation scheme. These soft decisions may be based on channel estimates computed by the channel processor 794. The soft decisions are then decoded and deinterleaved to recover the data, control, and reference signals. The CRC codes are then checked to determine whether the frames were successfully decoded. The data carried by the successfully decoded frames will then be provided to a data sink 772, which represents applications running in the UE 750 and/or various user interfaces (e.g., display). Control signals carried by successfully decoded frames will be provided to a controller/processor 790. When frames are unsuccessfully decoded by the receiver processor 770, the controller/processor 790 may also use an acknowledgement (ACK) and/or negative acknowledgement (NACK) protocol to support retransmission requests for those frames.

In the uplink, data from a data source 778 and control signals from the controller/processor 790 are provided to a transmit processor 780. The data source 778 may represent applications running in the UE 750 and various user interfaces (e.g., keyboard). Similar to the functionality described in connection with the downlink transmission by the Node B 710, the transmit processor 780 provides various signal processing functions including CRC codes, coding and interleaving to facilitate FEC, mapping to signal constellations, spreading with OVSFs, and scrambling to produce a series of symbols. Channel estimates, derived by the channel processor 794 from a reference signal transmitted by the Node B 710 or from feedback contained in the midamble transmitted by the Node B 710, may be used to select the appropriate coding, modulation, spreading, and/or scrambling schemes. The symbols produced by the transmit processor 780 will be provided to a transmit frame processor 782 to create a frame structure. The transmit frame processor 782 creates this frame structure by multiplexing the symbols with information from the controller/processor 790, resulting in a series of frames. The frames are then provided to a transmitter 756, which provides various signal conditioning functions including amplification, filtering, and modulating the frames onto a carrier for uplink transmission over the wireless medium through the antenna 752.

The uplink transmission is processed at the Node B 710 in a manner similar to that described in connection with the receiver function at the UE 750. A receiver 735 receives the uplink transmission through the antenna 734 and processes the transmission to recover the information modulated onto the carrier. The information recovered by the receiver 735 is provided to a receive frame processor 736, which parses each frame, and provides information from the frames to the channel processor 744 and the data, control, and reference signals to a receive processor 738. The receive processor 738 performs the inverse of the processing performed by the transmit processor 780 in the UE 750. The data and control signals carried by the successfully decoded frames may then be provided to a data sink 739 and the controller/processor, respectively. If some of the frames were unsuccessfully decoded by the receive processor, the controller/processor 740 may also use an acknowledgement (ACK) and/or negative acknowledgement (NACK) protocol to support retransmission requests for those frames.

The controller/processors 740 and 790 may be used to direct the operation at the Node B 710 and the UE 750, respectively. For example, the controller/processors 740 and 790 may provide various functions including timing, peripheral interfaces, voltage regulation, power management, and other control functions. The computer readable media of memories 742 and 792 may store data and software for the Node B 710 and the UE 750, respectively. A scheduler/processor 746 at the Node B 710 may be used to allocate resources to the UEs and schedule downlink and/or uplink transmissions for the UEs.

Several aspects of a telecommunications system have been presented with reference to an HSPA system. As those skilled in the art will readily appreciate, various aspects described throughout this disclosure may be extended to other telecommunication systems, network architectures and communication standards.

By way of example, various aspects may be extended to other UMTS systems such as W-CDMA, TD-SCDMA, High Speed Downlink Packet Access (HSDPA), High Speed Uplink Packet Access (HSUPA), High Speed Packet Access Plus (HSPA+) and TD-CDMA. Various aspects may also be extended to systems employing Long Term Evolution (LTE) (in FDD, TDD, or both modes), LTE-Advanced (LTE-A) (in FDD, TDD, or both modes), CDMA2000, Evolution-Data Optimized (EV-DO), Ultra Mobile Broadband (UMB), IEEE 802.11 (Wi-Fi), IEEE 802.16 (WiMAX), IEEE 802.20, Ultra-Wideband (UWB), Bluetooth, and/or other suitable systems. The actual telecommunication standard, network architecture, and/or communication standard employed will depend on the specific application and the overall design constraints imposed on the system.

In accordance with various aspects of the disclosure, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on a computer-readable medium. The computer-readable medium may be a non-transitory computer-readable medium. A non-transitory computer-readable medium includes, by way of example, a magnetic storage device (e.g., hard disk, floppy disk, magnetic strip), an optical disk (e.g., compact disk (CD), digital versatile disk (DVD)), a smart card, a flash memory device (e.g., card, stick, key drive), random access memory (RAM), read only memory (ROM), programmable ROM (PROM), erasable PROM (EPROM), electrically erasable PROM (EEPROM), a register, a removable disk, and any other suitable medium for storing software and/or instructions that may be accessed and read by a computer. The computer-readable medium may also include, by way of example, a carrier wave, a transmission line, and any other suitable medium for transmitting software and/or instructions that may be accessed and read by a computer. The computer-readable medium may be resident in the processing system, external to the processing system, or distributed across multiple entities including the processing system. The computer-readable medium may be embodied in a computer-program product. By way of example, a computer-program product may include a computer-readable medium in packaging materials. Those skilled in the art will recognize how best to implement the described functionality presented throughout this disclosure depending on the particular application and the overall design constraints imposed on the overall system.

## Claims

1. A method (300A) of mobile communication at a user equipment, UE, the method comprising the step of :
receiving (302), from a network entity, configuration information associated with an enhanced uplink in CELL_FACH state protocol, wherein the UE is configured to transmit uplink transmissions according to the enhanced uplink in CELL FACH state protocol, said method being **characterized in that** it further comprises the steps of:
determining (304) that mapping information of the configuration information is invalid, wherein invalid configuration information results in the UE being unable to transmit on the uplink; and
performing (306) at least one remedial action to ensure that the UE is able to transmit the uplink transmissions based on determining that the configuration information is invalid, wherein the at least one remedial action comprises at least initiating a cell updated procedure.

2. The method of claim 1, wherein the at least one remedial action further comprises transmitting a connection request to the network entity that indicates the UE will transmit uplink transmissions according to a legacy random access channel protocol where the configuration information is invalid.

3. The method of claim 2, wherein the connection request comprises a radio resource control, RRC, connection request indicating that the UE does not support enhanced uplink in CELL FACH state capability.

4. The method of claim 2, further comprising the steps of :
determining whether an establishment cause associated with the connection request comprises one of a set of establishment causes; and
transmitting the connection request to the network entity that indicates the UE will transmit uplink transmissions according to the legacy random access channel protocol where the establishment cause comprises one of the set of establishment causes.

5. The method of claim 1, wherein the at least one remedial action further comprises:
barring transmission of a connection request to a current cell; and
reselecting to another cell.

6. The method of claim 5 further comprising the steps of :
determining whether an establishment cause associated with the connection request comprises one of a set of establishment causes; and
performing the barring and reselecting only where the establishment cause is not one of a set of establishment causes.

7. The method of claim 1, wherein the at least one remedial action further comprises transmitting a connection request to a second network entity of a cell containing previously obtained mapping information associated with the current cell.

8. The method of claim 7, wherein the step of determining that the configuration information is invalid comprises the step of determining that mapping information of the configuration information is invalid.

9. The method of claim 7, further comprising the steps of :
determining whether an establishment cause associated with the connection request comprises one of a set of establishment causes; and
transmitting the connection request containing previously obtained mapping information to the second network entity only where the establishment cause is not one of the set of establishment causes.

10. The method of claim 1, further comprising the step of transmitting, prior to the step of receiving the configuration information from the network entity, an initial connection request to the network entity indicating that the UE is configured to transmit uplink transmissions according to enhanced uplink in CELL_FACH state protocol.

11. A user equipment (102), UE, for mobile communication, the UE comprising:
means for receiving (200), from a network entity, configuration information associated with enhanced uplink in CELL_FACH state protocol, wherein the UE is configured to transmit uplink transmissions according to the enhanced uplink in CELL FACH state protocol, said user equipment (102), UE, being **characterized in that** it further comprises :
means for determining (202) that mapping information of the configuration information is invalid , wherein invalid configuration information results in the UE being unable to transmit on the uplink; and
means (204) for performing at least one remedial action to ensure that the UE is able to transmit the uplink transmissions based on determining that the configuration information includes invalid configuration information, wherein the at least one remedial action comprises at least initiating a cell update procedure.

12. A non-transitory computer-readable storage medium (406), comprising instructions, that when executed by a processor (404), cause the processor to perform the method of claim 1.

## Patentansprüche

1. Ein Verfahren (300A) für eine mobile Kommunikation an einem Benutzergerät (User Equipment bzw. UE), wobei das Verfahren die folgenden Schritte aufweist:
Empfangen (302), von einer Netzwerkeinheit, von Konfigurationsinformationen, die mit einer erweiterten Aufwärtsstrecke im CELL_FACH-Zustandsprotokoll assoziiert sind, wobei das UE konfiguriert ist zum Senden von Aufwärtsstreckesendungen gemäß der erweiterten Aufwärtsstrecke im CELL_FACH-Zustandsprotokoll,
wobei das Verfahren **dadurch gekennzeichnet ist, dass** es weiterhin die folgenden Schritte aufweist:
Bestimmen (304), dass Mappinginformationen der Konfigurationsinformationen ungültig sind, wobei ungültige Konfigurationsinformationen zur Folge haben, dass das UE nicht auf der Aufwärtsstrecke senden kann, und
Durchführen (306) wenigstens einer Abhilfeaktion, um sicherzustellen, dass das UE die Aufwärtsstreckesendungen senden kann, basierend auf dem Bestimmen, dass die Konfigurationsinformationen ungültig sind, wobei die wenigstens eine Abhilfeaktion wenigstens das Einleiten einer Zellenaktualisierungsprozedur aufweist.

2. Verfahren nach Anspruch 1, wobei die wenigstens eine Abhilfeaktion weiterhin das Senden einer Verbindungsanfrage zu der Netzwerkeinheit aufweist, die angibt, dass das UE Aufwärtsstreckesendungen gemäß einem älteren Direktzugriffskanalprotokoll sendet, wenn die Konfigurationsinformationen ungültig sind.

3. Verfahren nach Anspruch 2, wobei die Verbindungsanfrage eine Funkressourcensteuerung (RRC)-Verbindungsanfrage ist, die angibt, dass das UE keine verbesserte Aufwärtsstrecke in der CELL_FACH-Zustandsfähigkeit unterstützt.

4. Verfahren nach Anspruch 2, das weiterhin die folgenden Schritte aufweist:
Bestimmen, ob ein mit der Verbindungsanfrage assoziierter Etablierungsgrund einer aus einem Satz von Etablierungsgründen ist, und
Senden der Verbindungsanfrage an die Netzwerkeinheit, die angibt, dass das UE Aufwärtsstreckesendungen gemäß dem älteren Direktzugriffskanalprotokoll sendet, wenn der Etablierungsgrund einer aus dem Satz von Etablierungsgründen ist.

5. Verfahren nach Anspruch 1, wobei die wenigstens eine Abhilfeaktion weiterhin aufweist:
Unterbinden des Sendens einer Verbindungsanfrage zu einer aktuellen Zelle, und
Neuauswählen einer anderen Zelle.

6. Verfahren nach Anspruch 5, das weiterhin die folgenden Schritte aufweist:
Bestimmen, ob ein mit der Verbindungsanfrage assoziierter Etablierungsgrund einer aus einem Satz von Etablierungsgründen ist, und
Durchführen des Unterbindens und des Neuauswählens nur, wenn der Etablierungsgrund keiner aus dem Satz von Etablierungsgründen ist.

7. Verfahren nach Anspruch 1, wobei die wenigstens eine Abhilfeaktion weiterhin das Senden einer Verbindungsanfrage an eine zweite Netzwerkeinheit einer Zelle, die zuvor erhaltene und mit der aktuellen Zelle assoziierte Mappinginformationen enthält, aufweist.

8. Verfahren nach Anspruch 7, wobei der Schritt zum Bestimmen, dass die Konfigurationsinformationen ungültig sind, einen Schritt zum Bestimmen, dass Mappinginformationen der Konfigurationsinformationen ungültig sind, aufweist.

9. Verfahren nach Anspruch 7, das weiterhin die folgenden Schritte aufweist:
Bestimmen, ob ein mit der Verbindungsanfrage assoziierter Etablierungsgrund einer aus einem Satz von Etablierungsgründen ist, und
Senden der Verbindungsanfrage, die zuvor erhaltene Mappinginformationen enthält, an die zweite Netzwerkeinheit nur dann, wenn der Etablierungsgrund keiner aus dem Satz von Etablierungsgründen ist.

10. Verfahren nach Anspruch 1, das weiterhin einen Schritt zum Senden, vor dem Schritt zum Empfangen der Konfigurationsinformationen von der Netzwerkeinheit, einer anfänglichen Verbindungsanfrage an die Netzwerkeinheit, die angibt, dass das UE konfiguriert ist zum Senden von Aufwärtsstreckesendungen gemäß einer erweiterten Aufwärtsstrecke im CELL_FACH-Zustandsprotokoll, aufweist.

11. Ein Benutzergerät (User Equipment bzw. UE) (102) für eine mobile Kommunikation, wobei das UE aufweist:
Mittel zum Empfangen (200), von einer Netzwerkeinheit, von Konfigurationsinformationen, die mit einer erweiterten Aufwärtsstrecke im CELL_FACH-Zustandsprotokoll assoziiert sind, wobei das UE konfiguriert ist zum Senden von Aufwärtsstreckesendungen gemäß der erweiterten Aufwärtsstrecke im CELL_FACH-Zustandsprotokoll,
wobei das UE (102) **dadurch gekennzeichnet ist, dass** es weiterhin aufweist:
Mittel zum Bestimmen (202), dass Mappinginformationen der Konfigurationsinformationen ungültig sind, wobei ungültige Konfigurationsinformationen zur Folge haben, dass das UE nicht auf der Aufwärtsstrecke senden kann, und
Mittel (204) zum Durchführen wenigstens einer Abhilfeaktion, um sicherzustellen, dass das UE die Aufwärtsstreckesendungen senden kann, basierend auf dem Bestimmen, dass die Konfigurationsinformationen ungültig sind, wobei die wenigstens eine Abhilfeaktion wenigstens das Einleiten einer Zellenaktualisierungsprozedur aufweist.

12. Ein nicht-transitorisches, computerlesbares Speichermedium (406), das Befehle aufweist, die bei einer Ausführung durch einen Prozessor (404) veranlassen, dass der Prozessor das Verfahren von Anspruch 1 durchführt.

## Revendications

1. Un procédé (300A) de communication mobile au niveau d'un équipement d'utilisateur, UE, le procédé comprenant l'opération suivante :
la réception (302), à partir d'une entité de réseau, d'informations de configuration associées à une liaison montante améliorée dans un protocole d'état CELL_FACH, où l'UE est configuré de façon à transmettre des transmissions en liaison montante en fonction de la liaison montante améliorée dans un protocole d'état CELL_FACH, ledit procédé étant **caractérisé en ce qu'**il comprend en outre les opérations suivantes :
la détermination (304) que des informations de mappage des informations de configuration sont non valides, où des informations de configuration non valides résultent en l'incapacité de l'UE à transmettre sur la liaison montante, et
l'exécution (306) d'au moins une action correctrice de façon à garantir que l'UE soit apte à transmettre les transmissions en liaison montante en fonction de la détermination que les informations de configuration sont non valides, où la au moins une action correctrice comprend au moins le lancement d'une procédure d'actualisation de cellule.

2. Le procédé selon la Revendication 1, où la au moins une action correctrice comprend en outre la transmission d'une demande de connexion à l'entité de réseau qui indique que l'UE transmettra des transmissions en liaison montante en fonction d'un protocole de canal d'accès aléatoire patrimonial dans lequel les informations de configuration sont non valides.

3. Le procédé selon la Revendication 2, où la demande de connexion comprend une demande de connexion de commande de ressource radio, RRC, indiquant que l'UE ne prend pas en charge une liaison montante améliorée dans une capacité d'état CELL_FACH.

4. Le procédé selon la Revendication 2, comprenant en outre les opérations suivantes :
la détermination si une cause d'établissement associée à la demande de connexion comprend une cause d'un ensemble de causes d'établissement, et
la transmission de la demande de connexion à l'entité de réseau qui indique que l'UE transmettra des transmissions en liaison montante en fonction du protocole de canal d'accès aléatoire patrimonial où la cause d'établissement comprend une cause de l'ensemble de causes d'établissement.

5. Le procédé selon la Revendication 1, où la au moins une action correctrice comprend en outre :
l'interdiction de transmission d'un demande de connexion à une cellule courante, et
la resélection vers une autre cellule.

6. Le procédé selon la Revendication 5 comprenant en outre les opérations suivantes :
la détermination si une cause d'établissement associée à la demande de connexion comprend une cause d'un ensemble de causes d'établissement, et
l'exécution de l'interdiction et de la resélection uniquement si la cause d'établissement n'est pas une cause d'un ensemble de causes d'établissement.

7. Le procédé selon la Revendication 1, où la au moins une action correctrice comprend en outre la transmission d'une demande de connexion à une deuxième entité de réseau d'une cellule contenant des informations de mappage obtenues antérieurement associées à la cellule courante.

8. Le procédé selon la Revendication 7, où l'opération de détermination que les informations de configuration sont non valides comprend l'opération de détermination que des informations de mappage des informations de configuration sont non valides.

9. Le procédé selon la Revendication 7, comprenant en outre les opérations suivantes :
la détermination si une cause d'établissement associée à la demande de connexion comprend une cause d'un ensemble de causes d'établissement, et
la transmission de la demande de connexion contenant des informations de mappage obtenues antérieurement à la deuxième entité de réseau uniquement si la cause d'établissement n'est pas une cause de l'ensemble de causes d'établissement.

10. Le procédé selon la Revendication 1, comprenant en outre l'opération de transmission, avant l'opération de réception des informations de configuration à partir de l'entité de réseau, d'une demande de connexion initiale à l'entité de réseau indiquant que l'UE est configuré de façon à transmettre des transmissions en liaison montante en fonction d'une liaison montante améliorée dans un protocole d'état CELL_FACH.

11. Un équipement d'utilisateur (102), UE, destiné à une communication mobile, l'UE comprenant :
un moyen de réception (200), à partir d'une entité de réseau, d'informations de configuration associées à une liaison montante améliorée dans un protocole d'état CELL_FACH, où l'UE est configuré de façon à transmettre des transmissions en liaison montante en fonction de la liaison montante améliorée dans un protocole d'état CELL_FACH, ledit équipement d'utilisateur (102), UE, étant **caractérisé en ce qu'**il comprend en outre :
un moyen de détermination (202) que des informations de mappage des informations de configuration sont non valides, où des informations de configuration non valides résultent en l'incapacité de l'UE à transmettre sur la liaison montante, et
un moyen (204) d'exécution d'au moins une action correctrice destinée à garantir que l'UE est apte à transmettre les transmissions en liaison montante en fonction de la détermination que les informations de configuration comprennent des informations de configuration non valides, où la au moins une action correctrice comprend au moins le lancement d'une procédure d'actualisation de cellule.

12. Un support à mémoire lisible par ordinateur non transitoire (406) contenant des instructions qui, lorsqu'elles sont exécutées par un processeur (404), amènent le processeur à exécuter le procédé selon la Revendication 1.
